# EUROPÄISCHE PATENTSCHRIFT

(11) **EP 0 434 600 B1**
(45) Veröffentlichungstag und Bekanntmachung des Hinweises auf die Patenterteilung: **27.04.1994**
(21) Anmeldenummer: 90810810.3
(22) Anmeldetag: 23.10.1990
(51) Int. Cl.: A47J 27/212

(54) **Wasserkessel**
Water kettle
Bouilloire

(30) Priorität: 22.12.1989 CH 4646/89
(43) Veröffentlichungstag der Anmeldung: 26.06.1991
(73) Patentinhaber: Heinrich Kuhn Metallwarenfabrik Aktiengesellschaft, 8486 Rikon im Tösstal (CH)
(72) Erfinder: Kuhn, Jacques, CH-8486 Rikon (CH)
(74) Vertreter: Groner, Manfred

(56) Entgegenhaltungen:
- DE-A- 3 241 883
- DE-B- 1 093 064
- DE-B- 1 140 324
- GB-A- 349 511
- GB-A- 625 781
- US-A- 1 486 802
- US-A- 2 624 493

## Beschreibung

Die vorliegende Erfindung betrifft einen Wasserkessel gemäss dem Oberbegriff des unabhängigen Patentanspruchs 1.

Wasserkessel sind seit langem bekannte Kochgefässe, um siedendes Wasser zu erzeugen. Es hat sich eingebürgert, dass solche Gefässe ausser dem Ausguss keine Oeffnung haben, so dass das Wasser durch den Ausguss einzufüllen ist. Damit ein Benützer gewarnt wird, wenn sich ein Dampfdruck über dem atmosphärischen Druck bildet, wird der Ausguss mit einem Deckel verschlossen, der ein akustisches Signal abgibt, wenn der Dampfdruck ein bestimmtes Mass überschreitet. Beispiele dazu zeigen DE-U-72 29 444, DE-U-75 11 797, DE-U-84 13 680. Um das heisse Wasser auszugiessen, müssen die Kappen mit den Signalgebern abgenommen werden. Dies kann zu einem ersten Fehlverhalten führen, wenn nämlich die Kappe nicht mehr aufgesetzt wird, der Kessel aber zurück auf die Heizstelle gestellt wird. Es gibt dann keine akustische Warnung mehr und das Wasser kann vollständig verdampfen.

In der GB-A-349 511 ist ein Flötenkessel beschrieben, bei dem der Flötenverschluss durch Anheben des Kessels am Haltegriff vom Ausguss abgehoben und beim Abstellen auf den Ausguss aufgesetzt wird. Nachteilig ist aber, dass der heisse Dampf aus dem Ausguss beim ausgiessen gegen die Hand steigt. Ausserdem gestattet diese Anordnung kein vollständiges entleeeren bei einhändigem halten am Haltegriff.

Gemäss der DE-A-32 41 883 bleibt der hochgeklappte Flötenkörper an einer zwischen Ausguss und Hand befindlichen Stelle, so dass der ausströmende Dampf nicht direkt zur Hand am Haltegriff hin gelangen kann.

Es ist deshalb eine Aufgabe der Erfindung, einen Wasserkessel zu schaffen, bei dem der Ausgussdeckel ohne Berührung in eine Offenstellung bringbar ist, um so die den Haltegriff fassende Bedienungshand zu schützen und der in Ruhelage den Ausguss selbsttätig abdeckt, wobei der Wasserkessel ausserdem noch eine Oeffnung für Reinigungszwecke aufweisen kann.

Erfindungsgemäss wird dies durch die Merkmale im kennzeichnenden Teil des unabhängigen Patentanspruchs 1 erreicht.

Ausführungsbeispiele der Erfindung werden nachfolgend anhand der Zeichnung erläutert. Es zeigen:
- Fig. 1: eine Schnittansicht eines Wasserkessels in Koch- und Ruhestellung in einstückiger tiefgezogener Ausbildung mit grosser Oeffnung im Oberteil und dazugehörendem Passdeckel, sowie mit einem Haltegriff, der am bodennahen Gebiet des Oberteils angelenkt ist und durch den Ausgussdeckel hindurchgreifend an der unteren Innenwand des Ausgusses ansteht und den Augussdeckel geschlossen hält,
- Fig. 2: eine Schnittansicht eines Wasserkessels in Trag- und Ausgussstellung in zweigeteilter Ausbildung mit Oberteil ohne grosse Einfüll- und Reinigungs-Oeffnung, das wasserdicht mit dem Boden verbunden ist, wobei der Haltegriff angehoben ist und nun an der oberen Innenwand des Ausgusses ansteht und den Ausgussdeckel in Ausgiessstellung und Dampfabweisstellung hält,
- Fig. 3: dieselbe Schnittansicht wie in Fig. 2, jedoch in Entleerlage,
- Fig. 4: eine Ansicht eines Wasserkessels mit grosser Einfüll- und Reinigungs-Oeffnung und einem zweifach gelagerten Haltegriff, der seitlich am Oberteil angelenkt ist,
- Fig.5: Detail-Schnittansicht zur Darstellung eines Scharniers für den Haltegriff mit Anschlag oberhalb des Scharniers,
- Fig. 6: Detail-Schnittansicht zur Darstellung eines Scharniers für den Haltegriff mit Anschlag unterhalb des Scharniers,
- Fig. 7: Detail-Schnittansicht mit Federelement zur gelenkigen Befestigung des Haltegriffs,
- Fig. 8: Detail-Schnittansicht der Ausgusspartie mit starr am Haltegriff befestigtem Ausgussdeckel und in denselben eingebautem Signalgeber,
- Fig. 9: Detail-Schnittansicht der Ausgusspartie mit am Haltegriff anscharniertem Ausgussdeckel.

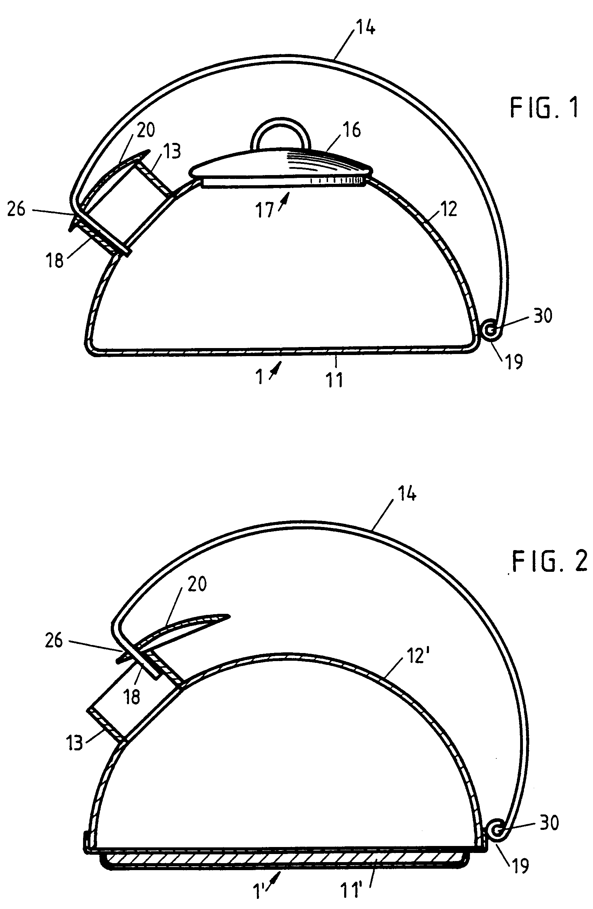

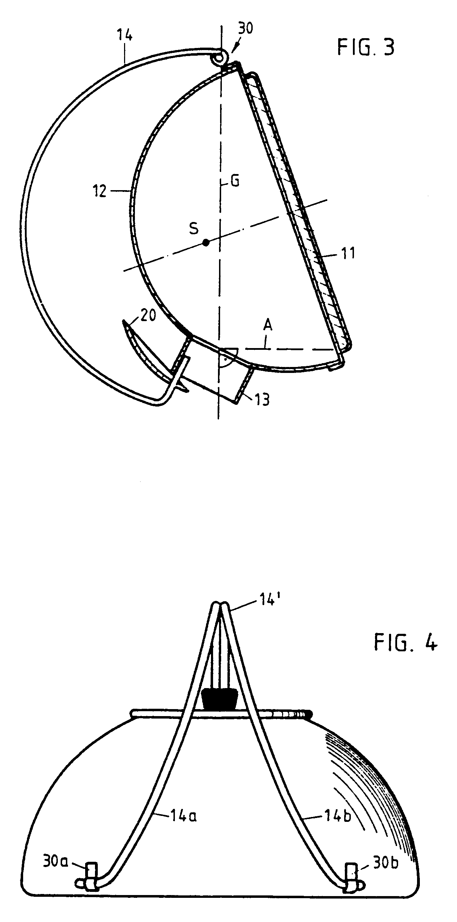

Der Wasserkessel 1 nach Fig. 1 in Form eines Hohlkörpers ist tiefgezogen und auf die Deckelweite eingezogen und kann daher einstückig ausgebildet sein. Das domartig gewölbte Oberteil 12 besitzt eine obere grosse Oeffnung 17, die das Einfüllen und das bequeme Hineingreifen zum leichten Reinigen erlaubt. Die Oeffnung 17 ist mittels eines Deckels 16 in Form eines gut sitzenden Steckdeckels verschliessbar.

Fig. 2 zeigt dagegen einen Wasserkessel 1' ohne grosse Einfüll- und Reinigungs-Oeffnung. Dieser Wasserkessel 1' ist zweistückig ausgebildet und besteht aus Boden 11' und wasserdicht damit verbundenem Oeberteil 12'. Der Boden 11' kann gemäss einer besonderen Beheizungsart bzw. dem Herdtyp ausgebildet sein, wie Gasherd oder Elektromassenplatte, Elektroglaskeramik oder induktiv beheizte Kochstelle, oder Dampfheizung bei Benützung als Caldor.

Beiden Ausführungsformen gemeinsam ist der Haltegriff 14, der einersetis aus seinem Endteil 19 am bodennahen Gebiet des Oberteils 12 angelenkt ist und mit seinem anderen Endteil 18 durch eine Oeffnung im Ausgussdeckel 20 hindurch in den Ausguss 13 eingreift.

In Fig. 1 ist die Koch- und Ruhelage des Haltegriffs 14 dargestellt, in der das andere Endteil 18 an der unteren inneren Wand des Ausgusses 13 anliegt. Dagegen zeigt Fig. 2 den angehobenen Haltegriff 14, wie er sich beim Tragen und Ausgiessen des Wasserkessels ergibt. Durch die Gelenkbefestigung am Endteil 19 kann der Haltegriff 14 nach oben schwenken, bis sein anderes Ende 18 am oberen Teil der Innenwand des Ausgusses 13 ansteht. Der Ausgussdeckel 20 wird damit nach oben verschoben und gibt die Ausgussöffnung des Ausgusses 13 frei. Der Ausgussdeckel 20 bleibt damit über dem Ausguss 13 liegen und gibt einen schildartigen Schutz für die den Haltegriff fassende Bedienungs-Hand gegen aufsteigenden Dampf.

Beim Abstellen des Wasserkessels wird der Ausgussdeckel 20 durch das Eigengewicht des Haltegriffes 14 wieder auf die Oeffnung des Ausgusses 13 verschoben und verschliesst daher denselben selbständig.

Die Lage der Gelenkstelle 30 für den Haltegriff 14 am Oberteil 12 des Wasserkessels ergibt sich aus der Geometrie des Schwerpunktes 5, wie Fig. 3 zeigt. Damit die letzten Wasserreste aus dem Wasserkessel ausgiessbar sind, muss der Ausgussdeckel 20 in Offenstellung bleiben, wenn die Tangentenebene an das Oberteil 12 beim unteren Rand der Ausgussöfnung horizontal liegt. Wie dargestellt, ist die Ausgiesslinie A parallel zur Tangentenebene, wie oben beschrieben, die Gerade G, die senkrecht auf der Ausgiesslinie A steht und durch die Gelenkstelle 30 geht, muss, wie in Fig. 3 gezeigt rechts des Schwerpunktes S sein, damit ein Drehmoment im Gegenuhrzeigersinn entsteht, das eine Kraftkomponente auf die Anlagestelle des Haltegriffs im Ausguss bewirkt, um so den Ausgussdeckel in der Offenlage zu halten.

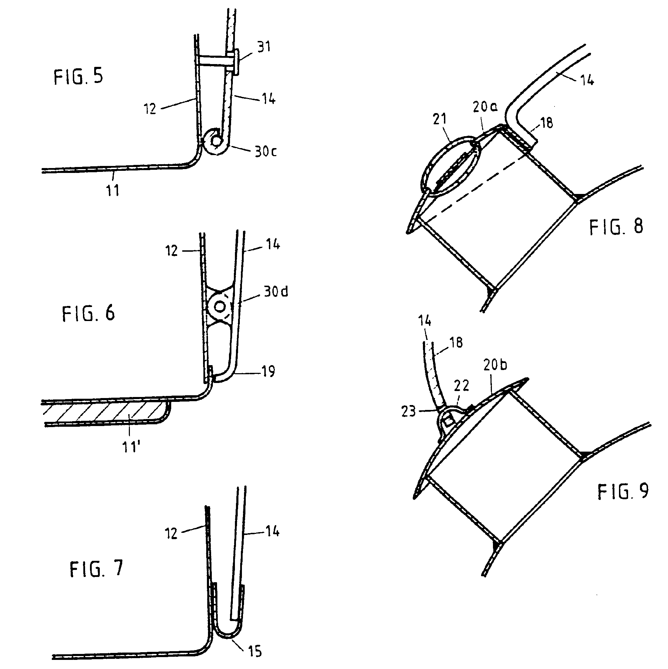

Fig. 4 zeigt eine Variante der Gelenkstelle für den Haltegriff 14'. Die beiden Scharniere 30a und 30b bilden in der Projektion auf den Boden zusammen mit dem Zentrum des Ausgusses ein Dreieck. Im Gebiet, wo die Hand den Haltegriff 14' üblicherweise fasst, sind die zwei Griffteile 14a und 14b vereint.

Die Fig. 5 und 6 zeigen zwei weitere Varianten für Gelenkstellen 30c und 30d des Haltegriffs 14 am Oberteil 12. Im einen Fall, gemäss Fig. 5 ist das Scharnier 30c gerade über dem Boden und mittels einer Niete 31 oder dgl. wird der Kippwinkel für den Haltegriff 14 begrenzt. Gemäss Fig. 6 befindet sich das Scharnier 30d mit geringem Abstand über dem Boden 11, wobei aber die oben beschriebene Wirkung des Schwerpunktes S zu berücksichtigen ist. Als Anschlag dient das abgewinkelte Ende 19 des Haltegriffs 14, das beim Anheben des Haltegriffs 14 an das Oberteil 12 anzuliegen kommt.

Eine weitere Variante ist in Fig. 7 dargestellt. Hier ist das Endteil 19 des Haltegriffs an einer Blattfeder 15 befestigt, die in ihrer Elastizität ein Scharnier ersetzt.

Die Befestigung des Ausgussdeckels 20 am Haltegriff 14 kann auch in mehreren Formen ausgebildet sein. So ist der Ausgussdeckel 20a gemäss Fig. 8 starr am Endteil 18 des Haltegriffs 14 befestigt. Er kann in bekannter Weise mit einem akustischen Tongeber, z.B. mit einer Flöte 21 oder Dampfpfeife ausgerüstet sein.

Der Ausgussdeckel 20b kann aber auch gemäss Fig. 9 mittels eines Scharniers am Endteil des Haltgriffs 14 befestigt sein.

## Patentansprüche

1. Wasserkessel, bestehend aus einem Hohlkörper (1) mit flachem Boden (11) und domartig gewölbtem Oberteil (12), mit einem Ausguss (13) am genannten Oberteil (12) und mit einem bügelförmig ausgebildeten Haltegriff (14), der mit seinem einen Ende (19) an seiner dem Ausguss (13) gegenüberliegenden und im bodennahen Gebiet des Oberteils (12) befindlichen Drehachse (30,30a,30b) schwenkbar gehaltert ist, wobei das freie Ende (18) des Haltegriffs (14) einen den Ausguss (13) in Koch- und Ruhestellung des Kessels (1) abdeckenden, in Trag- und Ausgiessstellung dessen Oeffnung freigebenden Ausgussdeckel (20) haltert, dadurch gekennzeichnet, dass das freie Ende (18) mit einem abgewinkelten Endteil (18) in den Ausguss (13) eingreifend ausgebildet ist und dass der Kippwinkel des Haltegriffs (14) durch wenigstens ein Anschlagmittel begrenzt ist, und wobei der Kessel so ausgebildet ist, dass, wenn die Tangentenebene an das Oberteil (12), beim unteren Rand der Ausgussöffnung, horizontal liegt, der Schwerpunkt des Kessels gegenüber der Geraden(G), die senkrecht auf der Tangentenebene steht und durch die Drehachse (30, 30a, 30b) des Haltegriffs (14, 14') geht, auf derselben Seite des Haltegriffs liegt.

2. Kessel nach Patentanspruch 1, dadurch gekennzeichnet, dass der Haltegriff (14) an zwei Stellen (30a,30b) des Oberteils (12) schwenkbar gelagert ist, die, unter sich und mit dem Zentrum der Öffnung des Ausgusses (13) verbunden, ein Dreieck bilden.

3. Kessel nach Patentanspruch 1 oder 2, dadurch gekennzeichnet, dass der Ausgussdeckel (20) starr mit dem freien Ende (18) des Haltegriffs (14) verbunden ist.

4. Kessel nach Patentanspruch 1 oder 2, dadurch gekennzeichnet, dass der Ausgussdeckel (20) freibeweglich am freien Ende (18) des Haltegriffs (14) gehaltert ist.

5. Kessel nach Patentanspruch 1 oder 2, dadurch gekennzeichnet, dass der Ausgussdeckel (20) am freien Ende (18) des Haltegriffs (14) anscharniert ist.

6. Kessel nach einem der Patentansprüche 3 bis 5, dadurch gekennzeichnet, dass der Ausgussdeckel (20) mit einem das Sieden des Kesselinhaltes signalisierenden Signalgeber (21) versehen ist.

7. Kessel nach den Patentansprüchen 4 und 5, dadurch gekennzeichnet, dass bei freibeweglich am Haltegriff (14) gehaltertem Ausgussdeckel (20) dieser selbst als Signalgeber dient, indem er bei Siedetemperatur im Kessel eine vibrierende Bewegung auszuführen im Stande ist.

8. Kessel nach Patentanspruch 4, dadurch gekennzeichnet, dass der Ausgussdeckel (20) eine exzentrische Oeffnung (26) aufweist, in die das freie Ende (18) des abgewinkelten Haltegriffs (14) lose eingesteckt ist, derart, dass der Ausgussdeckel (20) durch das Anheben des Haltegriffes (14) nach oben vom Ausguss (13) weggeschoben wird und beim Loslassen des Haltegriffes (14) selbsttätig seine Verschliesslage auf dem Ausguss (13) wieder einnimmt.

9. Kessel nach Patentanspruch 8, dadurch gekennzeichnet, dass der Signalgeber als Rassel ausgebildet ist.

10. Kessel nach Patentanspruch 9, dadurch gekennzeichnet, dass der Ausgussdeckel (20) aus mindestens zwei Deckelschichten besteht, von denen die inneren Deckelschichten neben der exzentrischen Oeffnung (26) wenigstens eine Signalöffnung für den Dampfdurchtritt aufweisen.

11. Kessel nach einem der Patentansprüche 3 bis 7, dadurch gekennzeichnet, dass der Ausgussdeckel (20) in der Tragund Ausgiessstellung des Kessels die Lage einnimmt, die den aus dem offenen Ausguss ausströmenden Dampf umlenkt, damit die den Haltegriff fassende Bedienungshand nicht direkt dem Dampfstrahl ausgesetzt ist.

12. Kessel nach Patentanspruch 1, dadurch gekennzeichnet, dass die Anschlagmittel für den Haltegriff (14) Anschläge in der Ausgusspartie sind.

13. Kessel nach Patentanspruch 1, dadurch gekennzeichnet, dass die Anschlagmittel für den Haltegriff (14) Anschläge in der Scharnierpartie sind.

14. Kessel nach Patentanspruch 1, dadurch gekennzeichnet, dass der Haltegriff (14) einseitig über ein Federelement mit der Aussenseite des Oberteils (12) verbunden ist.

15. Kessel nach Patentanspruch 1, dadurch gekennzeichnet, dass der Kessel (1) neben der Ausgussöffnung (14) eine mit einem gut schliessenden Deckel (16) abgedeckte zweite und grössere Einfüll- und Reinigungsöffnung (17) aufweist.

16. Kessel nach Patentanspruch 1, dadurch gekennzeichnet, dass die Bodenpartie des Kessels so beschaffen ist, dass nach dem Kochvorgang ein Warmhalteuntersatz selbsthaftend anbringbar ist.

17. Kessel nach Patentanspruch 1, dadurch gekennzeichnet, dass der Boden (11) zum Aufsetzen auf eine Kasserole ausgebildet ist.

## Claims

1. Kettle, comprising a hollow body (1) having a flat base (11) and upper part (12) which is arched in a dome-like manner, having a spout (13) on the above-mentioned upper part (12) and having a bow-shaped handle (14) which is pivotably secured, by one end (19), on its pivot axis (30, 30a, 30b) which is located opposite the spout (13) and in the region of the upper part (12) which is near to the base, the free end (18) of the handle (14) securing a spout cover (20) which covers the spout (13) when the kettle (1) is being boiled or is at rest and releases the opening of the spout when the kettle is being carried or is in the pouring-out position, characterized in that the free end (18) is designed such that it engages into the spout (13) by means of an angled-off end part (18), and in that the tilting angle of the handle (14) is delimited by at least one stop means, and the kettle being designed such that, if the tangent plane to the upper part (12), at the lower border of the spout opening, lies horizontally, then the centre of gravity of the kettle with respect to the straight line (G), which is perpendicular to the tangent plane and passes through the pivot axis (30, 30a, 30b) of the handle (14, 14'), is located on the same side as the handle.

2. Kettle according to Patent Claim 1, characterized in that the handle (14) is pivotably mounted at two points (30a, 30b) of the upper part (12) which form, with one another and connected to the centre of the opening of the spout (13), a triangle.

3. Kettle according to Patent Claim 1 or 2, characterized in that the spout cover (20) is connected rigidly to the free end (18) of the handle (14).

4. Kettle according to Patent Claim 1 or 2, characterized in that the spout cover (20) is secured, such that it can move freely, on the free end (18) of the handle (14).

5. Kettle according to Patent Claim 1 or 2, characterized in that the spout cover (20) is attached by hinges to the free end (18) of the handle (14).

6. Kettle according to one of Patent Claims 3 to 5, characterized in that the spout cover (20) is provided with a signal generator (21) which signals when the contents of the kettle has boiled.

7. Kettle according to Patent Claims 4 and 5, characterized in that, when the spout cover (20) is secured, such that it can move freely, on the handle (14), said cover itself serves as signal generator in that it is capable of effecting a vibratory movement at boiling temperature in the kettle.

8. Kettle according to Patent Claim 4, characterized in that the spout cover (20) has an eccentric opening (26) into which the free end (18) of the angled-off handle (14) is loosely plugged such that, by raising the handle (14), the spout cover (20) is pushed away upwards from the spout (13) and, when the handle (14) is released, said cover automatically resumes its closed position on the spout (13).

9. Kettle according to Patent Claim 8, characterized in that the signal generator is in the form of a rattle.

10. Kettle according to Patent Claim 9, characterized in that the spout cover (20) comprises at least two cover layers, of which the inner cover layers have, in addition to the eccentric opening (26), at least one signal opening for the passage of steam.

11. Kettle according to one of Patent Claims 3 to 7, characterized in that, when the kettle is being carried or is in the pouring-out position, the spout cover (20) assumes the position which deflects the steam flowing out of the open spout in order that the hand gripping the handle is not directly exposed to the jet of steam.

12. Kettle according to Patent Claim 1, characterized in that the stop means for the handle (14) are stops in the spout portion.

13. Kettle according to Patent Claim 1, characterized in that the stop means for the handle (14) are stops in the hinge portion.

14. Kettle according to Patent Claim 1, characterized in that, on one side, the handle (14) is connected, via a spring element, to the outer side of the upper part (12).

15. Kettle according to Patent Claim 1, characterized in that, in addition to the spout opening, the kettle (1) has a second and larger filling and cleaning opening (17) with a tightly-closing cover (16).

16. Kettle according to Patent Claim 1, characterized in that the base portion of the kettle is designed such that, after boiling, a stand which keeps the kettle hot can be fitted in a self-attaching manner.

17. Kettle according to Patent Claim 1, characterized in that the base (11) is designed for placing the kettle onto a pan.

## Revendications

1. Bouilloire, constituée par un corps creux (1) avec un fond plat (11) et une partie supérieure bombée en forme de dôme (12), avec un bec verseur (13) sur la partie supérieure (12) et avec une poignée (14) conçue en forme d'étrier, qui est fixée de façon pivotante par l'une de ses extrémités (19) sur son axe pivotant (30,30a,30b) se trouvant en regard du bec verseur (13) et dans la zone proche du fond de la partie supérieure (12), l'extrémité libre (18) de la poignée (14) servant à maintenir un couvercle de bec (20) recouvrant le bec (13) dans la position de cuisson ou d'ébullition et de repos de la bouilloire (1), et libérant son ouverture dans la position transportée et verseuse, caractérisée en ce que l'extrémité libre (18) est conçue avec une partie d'extrémité coudée (18) pénétrant dans le bec verseur (13) et en ce que l'angle d'inclinaison de la poignée (14) est délimité par au moins un élément de butée, et la bouilloire étant conçue de telle manière que lorsque le plan tangentiel à la partie supérieure (12), pour le bord inférieur de l'ouverture du bec, se situe horizontalement, le centre de gravité de la bouilloire par rapport à la droite (G), qui se situe perpendiculairement au plan tangentiel et passe par l'axe de rotation (30,30a,30b) de la poignée (14,14'), se situe sur le même côté que la poignée.

2. Bouilloire selon la revendication 1, caractérisée en ce que la poignée (14) est logée de façon pivotante ou basculante sur deux points (30a,30b) de la partie supérieure (12), qui, raccordés entre eux et avec le centre de l'ouverture du bec (13), forment un triangle.

3. Bouilloire selon la revendication 1 ou 2, caractérisée en ce que le couvercle du bec (20) est raccordé rigidement à l'extrémité libre (18) da la poignée (14).

4. Bouilloire selon la revendication 1 ou 2, caractérisée en ce que le couvercle du bec (20) est fixé de façon amovible sur l'extrémité libre (18) de la poignée (14).

5. Bouilloire selon la revendication 1 ou 2, caractérisée en ce que le couvercle du bec (20) est monté sous forme d'articulation à charnière sur l'extrémité libre (18) de la poignée (14).

6. Bouilloire selon l'une des revendications 3 à 5, caractérisée en ce que le couvercle du bec (20) est muni d'un émetteur de signaux (21) signalant l'ébullition du contenu de la bouilloire.

7. Bouilloire selon les revendications 4 et 5, caractérisée en ce qu'avec le couvercle du bec (20) fixé de façon amovible sur la poignée (14), ce couvercle lui-même sert d'émetteur de signaux en effectuant un mouvement vibrant lorsque la température d'ébullition est atteinte dans la bouilloire.

8. Bouilloire selon la revendication 4, caractérisée en ce que le couvercle du bec (20) comporte une ouverture excentrique (26) dans laquelle l'extrémité libre (18) de la poignée coudée (14) est enfoncée de façon amovible de telle sorte que le couvercle du bec (20) par le soulèvement de la poignée (14) peut être séparé du bec par un mouvement vers le haut et lors de la libération de la poignée (14), reprendre automatiquement sa position de fermeture sur le bec (13).

9. Bouilloire selon la revendication 8, caractérisée en ce que l'émetteur de signaux est conçu sous forme de vibreur sonore.

10. Bouilloire selon la revendication 9, caractérisée en ce que le couvercle du bec (20) est constitué par au moins deux couches dont les couches internes à proximité de l'ouverture excentrique (26) présentent au moins une ouverture de signaux pour le passage de la vapeur.

11. Bouilloire selon l'une des revendications 3 à 7, caractérisée en ce que le couvercle du bec (20) dans la position transportée et verseuse de la bouilloire occupe une place qui fait dévier la vapeur sortant du bec ouvert afin de ne pas exposer la main de la personne qui assure le service et tient la poignée, directement au jet de vapeur.

12. Bouilloire selon la revendication 1, caractérisée en ce que les éléments d'arrêt pour la poignée (14) sont des butées situées dans la partie du bec.

13. Bouilloire selon la revendication 1, caractérisée en ce que les éléments d'arrêt pour la poignée (14) sont des butées situées dans la partie formant l'articulation à charnière.

14. Bouilloire selon la revendication 1, caractérisée en ce que la poignée (14) est raccordée sur un côté par un élément à ressort au côté extérieur de la partie supérieure (12).

15. Bouilloire selon la revendication 1, caractérisée en ce que la bouilloire (1) présente à côté de l'ouverture du bec (14) une deuxième et plus grande ouverture de remplissage et de nettoyage (17) recouverte d'un couvercle (16) assurant une bonne fermeture.

16. Bouilloire selon la revendication 1, caractérisée en ce que la partie de fond de la bouilloire est conçue de telle sorte qu'après la cuisson ou portée à ébullition, un support de maintien de la chaleur peut être appliqué de façon autocollante.

17. Bouilloire selon la revendication 1, caractérisée en ce que le fond (11) est conçu de façon à pouvoir être posé sur une casserole.
